# EUROPEAN PATENT APPLICATION

(11) **EP 4 799 854 A1**
(43) Date of publication of application: **02.09.2026**
(21) Application number: 26157520.3
(22) Date of filing: 10.02.2026
(51) Int. Cl.: B60L 53/31, B60L 53/63, B60L 53/65, B60L 53/66, B60L 53/67, B60L 53/80, B60L 58/16, B60L 58/22

(54) **DETECTION METHOD FOR ABNORMALLY CHARGED BATTERY AND BATTERY ENERGY STATIONS THEREOF**

(30) Priority: 27.02.2025 TW 114107395
(71) Applicant: Kwang Yang Motor Co., Ltd., Kaohsiung (TW)
(72) Inventor: LIU, Yu-Rui, Kaohsiung (TW); HSU, Chi-Hui, Kaohsiung (TW)
(74) Representative: Viering, Jentschura & Partner mbB Patent- und Rechtsanwälte

(57) **Abstract**

A detection method for an abnormally charged battery is executed by a processor unit (140) of a battery energy station (100). The detection method includes: obtaining a battery state of a battery (112) in the battery energy station (100) at a detection time; when determining that the battery (112) is in the activated state, shutting down the battery (112) through a battery management system (BMS), restarting the battery (112), and recharging the battery (112); further determining whether receiving an abnormality notification corresponding to the battery (112) from the battery management system (BMS); when receiving the abnormality notification corresponding to the battery (112) from the battery management system (BMS), identifying that the battery (112) is being abnormally charged. The detection method prevents risks of having the battery (112) unnoticeably being abnormally charged.

## Description

### 1. Field of the Invention

The present invention relates to a detection method for an abnormally charged battery and a battery energy station thereof, and more particularly a detection method and a battery energy station that can execute a special program for detecting whether a battery in an activated state is abnormally charged.

### 2. Description of the Related Art

In recent years, with the rise of environmental awareness and advancements of electric vehicle technology, developments of electric vehicles powered by electricity to replace traditional vehicles powered by fossil fuels have gradually become an important goal in automotive field, making electric vehicles (EVs) more and more popular. In order to increase a traveling range of EVs and public's willingness to use EVs, many countries or cities plan to set up EV charging stations and battery energy stations in public places for providing charging or battery replacement for EVs and/or electric scooters, thus ensuring convenience for using electric vehicles.

For different electric vehicles, the charging or battery requirements during peak and off-peak hours may differ. For example, electric motorcycles have a higher demand for battery charging during peak hours than off-peak hours. During peak hours, battery power stations need to charge the batteries at higher speeds for quickly bringing batteries to full charge. However, during off-peak hours, since battery charging is less demanded, battery energy stations are able to charge the batteries slower for saving electricity costs while still satisfying charging demands. Different electric vehicles may also have different numbers of batteries, thus different electric vehicles may have different charging requirements regarding battery quantities.

Since battery charging takes time, riders of electric motorcycles often rely on battery swapping at battery energy stations to replenish battery charge during rush hours. For battery manufacturers, maintaining the functionality of battery swapping at battery energy stations contributes to a significant part of operational cost. Since rechargeable batteries each have a limited lifespan before malfunctioning, a pressing issue for the industry revolves around how to properly manage the charging and swapping operations of batteries in battery energy stations with respect to batteries possibly malfunctioning at the battery energy stations.

To overcome the aforementioned problem, the present invention provides a detection method for an abnormally charged battery and a battery energy station thereof.

An embodiment of the detection method is adapted to a battery energy station and executed by a processor unit of the battery energy station, and the detection method includes: obtaining a battery state of a battery in the battery energy station at a detection time; determining whether a battery state of the battery is in an activated state; when the battery is in the activated state, shutting down the battery through a battery management system, restarting the battery, and recharging the battery; further determining whether receiving an abnormality notification corresponding to the battery from the battery management system; when receiving the abnormality notification corresponding to the battery from the battery management system, identifying that the battery is being abnormally charged.

An embodiment of the battery energy station for detecting an abnormally charged battery includes a battery storage system, a battery management system, an energy module, and a processor unit. The battery storage system stores at least one battery, the battery management system is utilized to manage the at least one battery, and the energy module is utilized to charge the at least one battery. The processor unit is coupled to the battery storage system, the battery management system, and the energy module. For a battery from the at least one battery, the processor unit obtains a battery state of the battery in the battery energy station at a detection time and determines whether the battery state of the battery is in an activated state. When the battery is in the activated state, the processor unit shuts down the battery through the battery management system, restarts the battery, and recharges the battery through the energy module. The processor unit further determines whether receiving an abnormality notification corresponding to the battery from the battery management system. When receiving the abnormality notification corresponding to the battery from the battery management system, the processor unit identifies that the battery is being abnormally charged.

In an embodiment, the processor unit receives the detection time from a remote server through a network.

In an embodiment, the processor unit of the battery energy station sends a notification to a remote server through a network for indicating the battery is being abnormally charged.

In an embodiment, the processor unit locks and excludes the battery that is being abnormally charged away from being available for battery swapping.

In an embodiment, the processor unit of the battery energy station records a charging abnormality event information corresponding to the battery being abnormally charged. The processor unit then determines whether a certain event occurred. When the certain event occurred, the processor of the battery energy station deletes the charging abnormality event information. The certain event includes a determination that the battery is being swapped as the battery exits the battery storage system by the processor unit and/or a determination that the battery energy station is being restarted by the processor unit.

The aforementioned detection method may exist in programming codes in a storage medium. When the programming codes are loaded and executed from the storage medium by a machine, the machine thus becomes a device that executes the aforementioned detection method of the present invention.

### IN THE DRAWINGS

Fig. 1 is a block diagram of an embodiment of a battery energy station of the present invention.
Fig. 2 is a perspective view of an embodiment of the battery energy station of the present invention connecting to a remote server through a network.
Fig. 3 is a flow chart of an embodiment of a detection method for an abnormally charged battery.
Fig. 4 is another flow chart of an embodiment of the detection method for the abnormally charged battery.
Fig. 5 is another flow chart of an embodiment of the detection method for the abnormally charged battery.
Fig. 6 is another flow chart of an embodiment of the detection method for the abnormally charged battery.
Fig. 7 is another flow chart of an embodiment of the detection method for the abnormally charged battery.

The present invention provides a detection method for an abnormally charged battery and a battery energy station for detecting an abnormally charged battery.

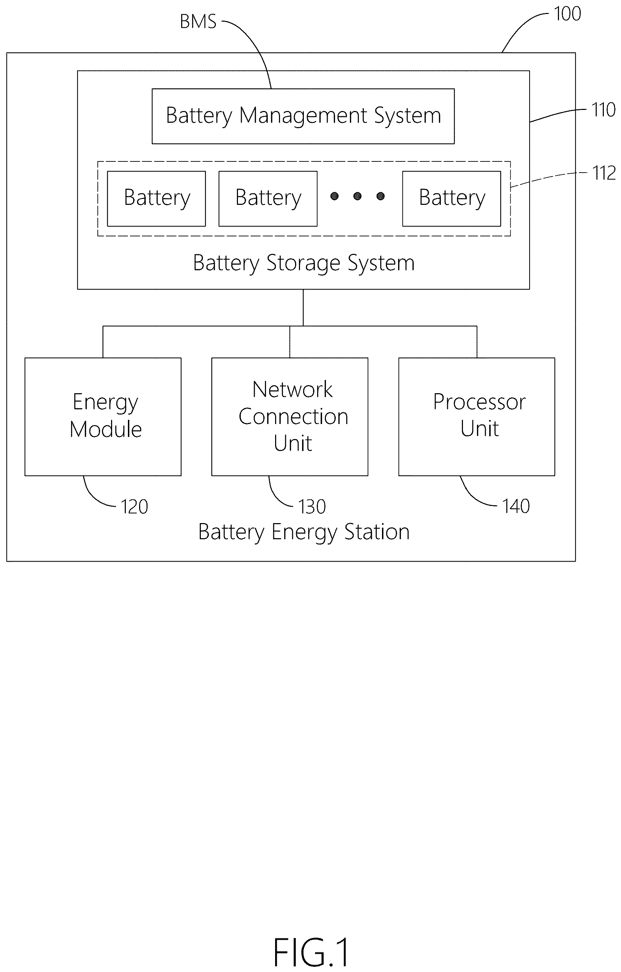

With reference to Fig. 1, a battery energy station 100 of an embodiment of the present invention is adopted to utilize with an electronic device. For instance, the battery energy station 100 at least includes a battery storage system 110, an energy module 120, a network connection unit 130, and a processor unit 140. The battery storage system 110 includes a storage structure (not shown in figures) that is capable of storing a plurality of batteries 112. The storage structure of the battery storage system 110 may also selectively lock or unlock some of the batteries 112. The locked batteries 112 are prevented from leaving the storage structure, while the unlocked batteries 112 are available from being swapped by a person and thus leaving the storage structure. The storage structure of the battery storage system 110 may include a plurality of battery slots for storing the batteries 112. The battery energy station 100 may also include at least one battery management system BMS. Each of the at least one battery management system BMS is capable of managing the plurality of batteries 112 stored in the battery storage system 110. Please note that the at least one battery management system BMS may be each positioned within each of the batteries 112 or the at least one battery management system BMS may be entirely positioned externally outside of the batteries 112. The battery energy station 100 is utilized for providing charges to at least one device, such as providing charges to electrical scooters, electric motorcycles, electric vehicles, etc. The energy module 120 may be electrically coupled to a power grid (not shown in figures), and thus allowing the energy module 120 to obtain a total current flux from the power grid. This total current flux is supplied to the battery energy station 100 and directed to charge the batteries 112 according to the processor unit 140's commands. The battery storage system 110 may also include a plurality of chargers for the batteries 112, so that each of the chargers is utilized to charge one of the batteries 112 with an upper current threshold and a lower current threshold. In an embodiment, the energy module 120 actively measure the total current flux supplied from the power grid to the battery energy station 100 and reports the total current flux to the processor unit 140. The network connection unit 130 connects to an internet network, thus allowing the battery energy station 100 to access the internet. In some embodiments, the internet network may be a wired internet network, a telecommunication network, or a wireless network, such as a Wi-Fi network. The processor unit 140 is able to control all hardware and software of the battery energy station 100, and the processor unit 140 is utilized for executing the detection method for the abnormally charged battery of the present invention. The detection method of the present invention will be discussed in later parts of the specification.

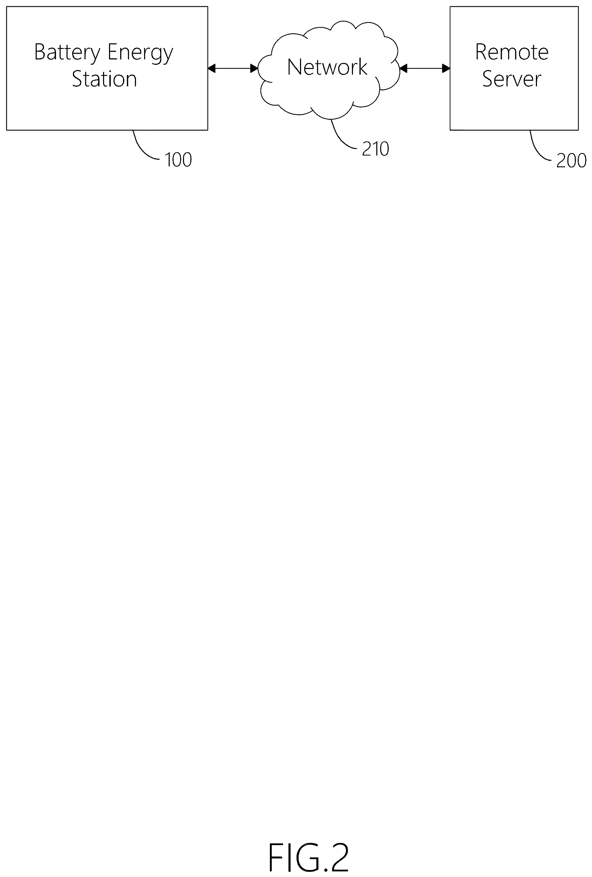

With further reference to Fig. 2, in another embodiment, similarly, the battery energy station 100 is adopted to utilize with an electronic device, and the battery energy station 100 stores a plurality of batteries that may be provided to at least one device, such as providing charges to electrical scooters, electric motorcycles, electric vehicles, etc. The battery energy station 100 may have similar features as shown in Fig. 1, hence repeated descriptions of these features are omitted. The battery energy station 100 may be utilized to connect to a network 210 through the network connection unit 130 and to further connect to a remote server 200 through the network 210. The network 210 may be a wired internet network, a telecommunication network, a wireless network, such as a Wi-Fi network. Please note that the remote server 200 may be utilized to manage the battery energy station 100 positioned at a same local location, or, the remote server 200 may be utilized to manage the battery energy station 100 positioned at a different location. As previously described, the energy module 120 of the battery energy station 100 may be utilized to actively measure the total current flux supplied from the power grid to the battery energy station 100 and reports the total current flux to the processor unit 140. In an embodiment, the remote server 200 may also inform the battery energy station 100 about the total current flux through the network 210. In an embodiment, the remote server 200 may also inform the battery energy station 100 about time information such as rush hours or off-peak hours for battery charging through the network 210. In an embodiment, the remote server 200 may also inform the battery energy station 100 about customer related information through the network 210. As a result, the battery energy station 100 may operate according to the various information received from the remote server 200 through the network 210.

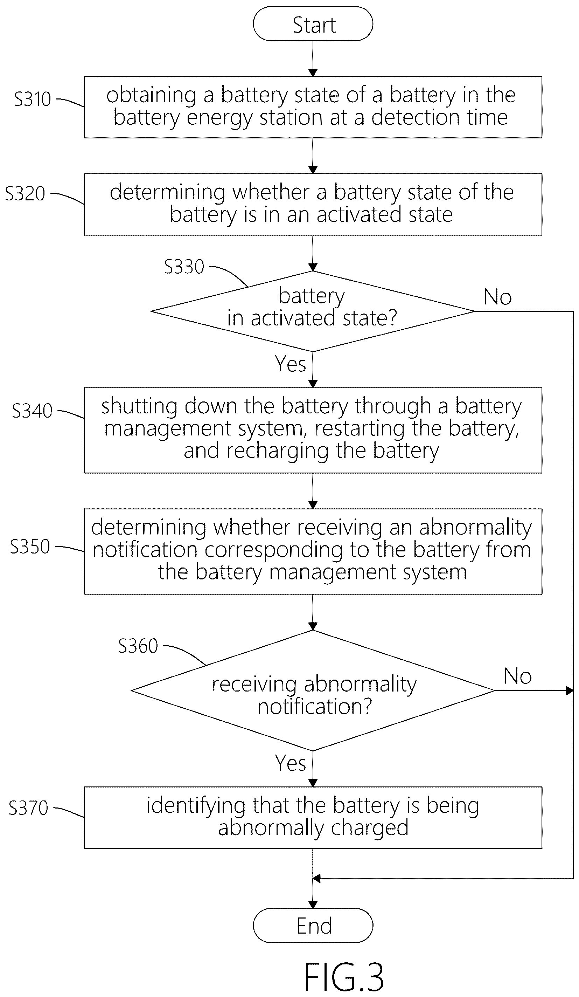

With reference to Fig. 3, the detection method for the abnormally charged battery of the present invention is utilized by an electronic device that stores batteries and charges the batteries, such as utilized by the battery energy station 100 shown in Fig. 1. The detection method of the present invention includes the following steps: obtaining a battery state of a battery in the battery energy station at a detection time (S310); determining whether the battery state of the battery is in an activated state (S320); when the battery is in an inactive state, or not in the activated state (the "no" path of S330), then ending the steps; when the battery is in the activated state (the "yes" path of S330), then shutting down the battery through a battery management system, restarting the battery, and recharging the battery through the energy module (S340); further determining whether receiving an abnormality notification corresponding to the battery from the battery management system (S350); when not receiving the abnormality notification corresponding to the battery from the battery management system (the "no" path of S360), then ending the steps; when receiving the abnormality notification corresponding to the battery from the battery management system (the "yes" path of S360), then identifying that the battery is being abnormally charged (S370). Please note that the battery state of the battery, such as a lithium-ion battery, may either be in the activated state (an awakened state) or the inactive state (sleeping state). When the battery management system detects that the battery cannot be charged, the battery management system will generate the abnormality notification.

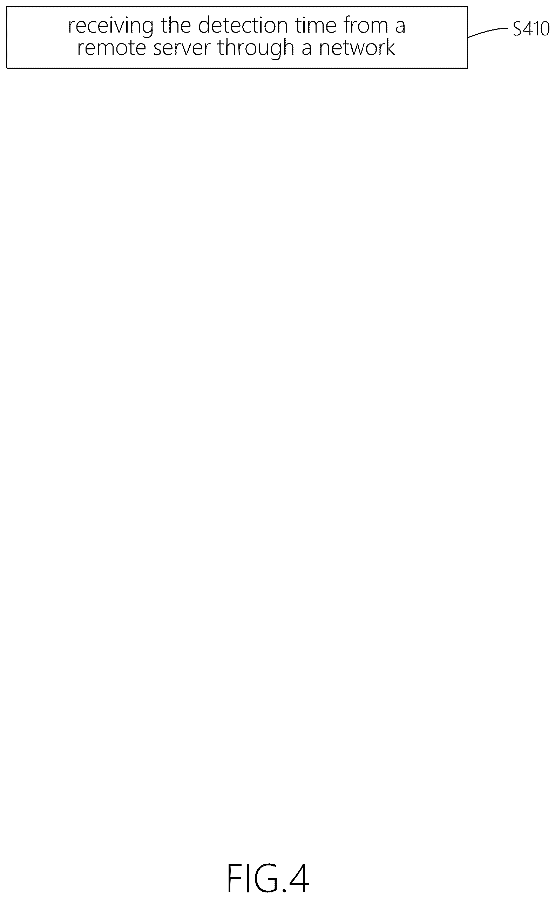

With reference to Fig. 4, in another embodiment, the detection method of the present invention is adopted to utilize with an electronic device, such as the battery energy station 100 shown in Fig. 1, that stores and charges a plurality of batteries. The detection method further includes a step of: receiving the detection time from a remote server through a network (S410), wherein the remote server can execute steps as shown in Fig. 3's embodiment. The remote server may be utilized to manage the battery energy station positioned at a same local location, or, the remote server may be utilized to manage the battery energy station positioned at a different location. The remote server may analyze about time information such as rush hours or off-peak hours for battery swapping at the battery energy station based on historical data. The remote server may also individually schedule the detection time to a battery station, and further send the different detection times to different battery stations, hence scheduling each battery station to detect batteries at the corresponding detection time. As a result, each of the battery energy stations may execute the detection method at the detection time decided by the remote server.

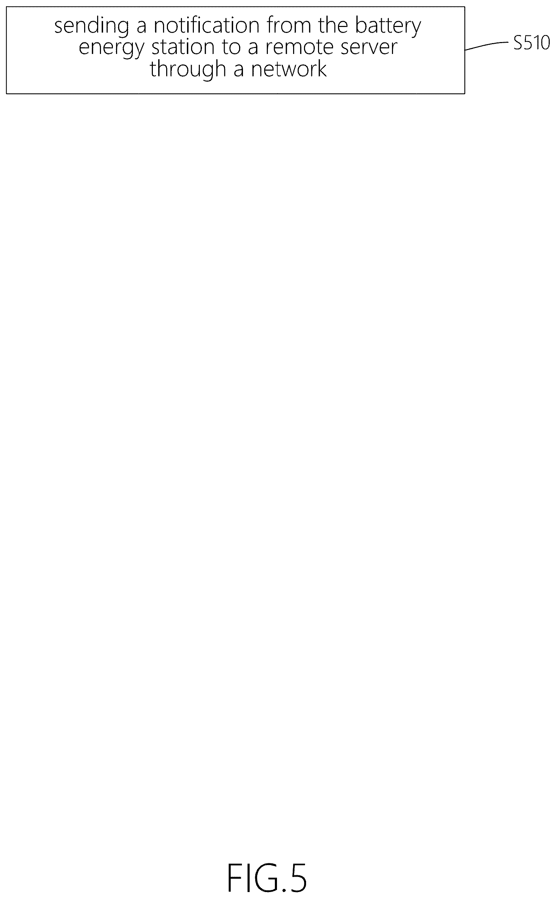

With reference to Fig. 5, in another embodiment, the detection method of the present invention is adopted to utilize with an electronic device, such as the battery energy station 100 shown in Fig.1, that stores and charges a plurality of batteries. The detection method further includes the following step: when identifying that the battery is being abnormally charged, sending a notification from the battery energy station to a remote server through a network (S510), wherein the network may be a wired internet network, a telecommunication network, a wireless network, such as a Wi-Fi network.

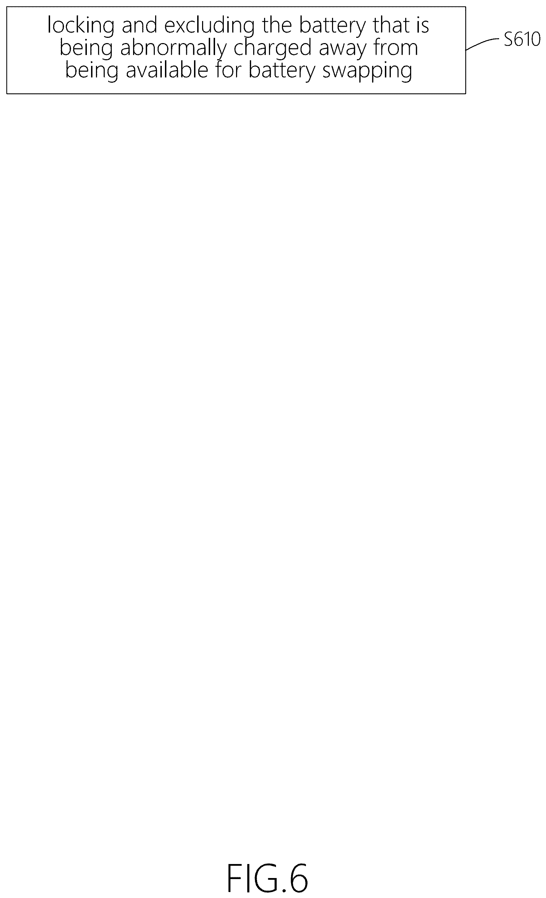

With reference to Fig. 6, in another embodiment, the detection method of the present invention is adopted to utilize with an electronic device, such as the battery energy station 100 shown in Fig.1, that stores and charges a plurality of batteries. The detection method further includes the following step: when identifying that the battery is being abnormally charged, locking and excluding the battery that is being abnormally charged away from being available for battery swapping (S610). This way, the battery that is being abnormally charged is locked away from users to prevent the user accidentally swapping an abnormally charged battery at the battery energy station. In another embodiment, the abnormally charged battery is still allowed to be swapped, and thus the present invention may conditionally still allow the abnormally charged battery to be unlocked and included for swapping.

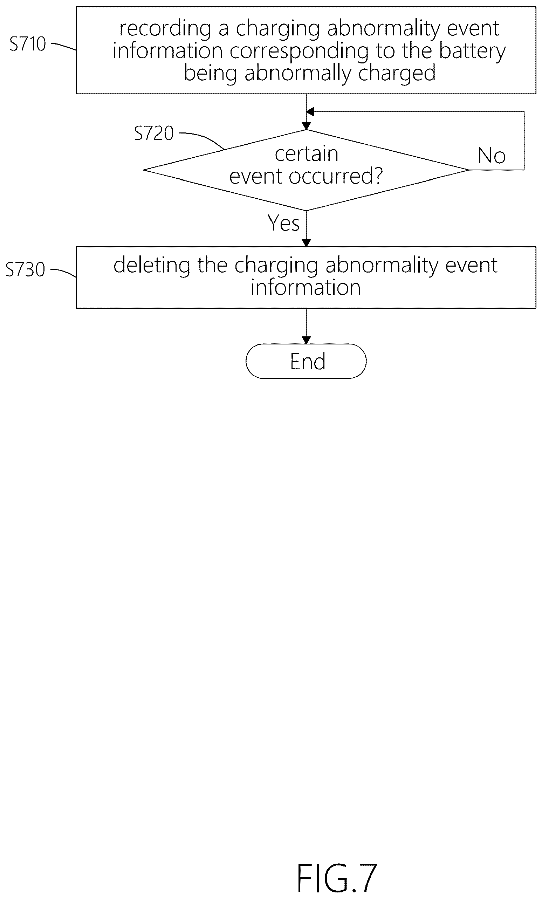

With reference to Fig. 7, in another embodiment, the detection method of the present invention is adopted to utilize with an electronic device, such as the battery energy station 100 shown in Fig.1, that stores and charges a plurality of batteries. The detection method further includes the following steps: when identifying that the battery is being abnormally charged, recording a charging abnormality event information corresponding to the battery being abnormally charged (S710); then determining whether a certain event occurred (S720); when the certain event has not occurred (the "no" path of S720), continuing executing step S720; and when the certain event occurred (the "yes" path of S720), deleting the charging abnormality event information (S730). Please note that, in an embodiment, the certain event is a determination of whether the battery is exiting the battery storage system. If the processor unit determines that the battery is exiting the battery storage system, then the processor unit determines that the battery is being swapped, and thus the processor unit determines that the certain event occurred. In another embodiment, the certain event is a determination of whether the battery energy station is restarting. If the processor unit determines that the battery energy station is restarting, then the processor unit determines that the certain event occurred.

Through executing the detection method of the present invention, the present invention is able to execute a special program having the aforementioned series of special steps towards the battery in the activated state for determining whether the battery in the activated state is being abnormally charged. This determination prevents the abnormally charged battery from unnoticeably being continuously abnormally charged. Furthermore, the present invention may also prevent risks of users unknowingly swapping the abnormally charged battery, thus preventing further safety risks from happening.

The detection method of the present invention may exist as programming codes in a storage medium. The storage medium having the said programming codes may be a floppy disk, a compact disc (CD), a hard drive, or any other form of computer readable storage medium. The programming codes may also exist in any product forms of computer programs. When the programming codes are loaded and executed from the storage medium by a machine, such as a computer, the machine thus becomes a device that executes the aforementioned detection method of the present invention. The programming codes may also be transported from wires, electric cables, optical cables, or any other physical forms. When the programming codes are executed for general purposes uses, the programming codes in combination with the processor unit that executes the programming codes provide a unique functionality that resembles a unique device having application specific logical circuits.

## Claims

1. A detection method for an abnormally charged battery, **characterized in that** the detection method is adapted to a battery energy station (100) and executed by a processor unit (140) of the battery energy station (100), and the detection method comprises the following steps:
obtaining a battery state of a battery (112) in the battery energy station (100) at a detection time;
determining whether the battery state of the battery (112) is in an activated state;
when the battery (112) is in the activated state, shutting down the battery (112) through a battery management system (BMS), restarting the battery (112), and recharging the battery (112);
determining whether receiving an abnormality notification corresponding to the battery (112) from the battery management system (BMS); and
when receiving the abnormality notification corresponding to the battery (112) from the battery management system (BMS), identifying that the battery (112) is being abnormally charged.

2. The detection method as claimed in claim 1, further comprising the step of:
receiving the detection time from a remote server (200) through a network (210).

3. The detection method as claimed in claim 1, further comprising the step of:
sending a notification to a remote server (200) through a network (210) for indicating the battery (112) is being abnormally charged.

4. The detection method as claimed in claim 1, further comprising the step of:
locking and excluding the battery (112) that is being abnormally charged away from being available for battery swapping.

5. The detection method as claimed in claim 1, further comprising the steps of:
recording a charging abnormality event information corresponding to the battery (112) being abnormally charged;
determining whether a certain event occurred; and
when the certain event occurred, deleting the charging abnormality event information;
wherein the certain event comprises a determination that the battery (112) is being swapped by the processor unit (140) and/or a determination that the battery energy station (100) is being restarted by the processor unit (140).

6. A battery energy station (100) for detecting an abnormally charged battery, **characterized in that** the battery energy station (100) comprises:
a battery storage system (110), storing at least one battery (112);
a battery management system (BMS), utilized to manage the at least one battery (112);
an energy module (120), utilized to charge the at least one battery (112); and
a processor unit (140), coupled to the battery storage system (110), the battery management system (BMS), and the energy module (120); wherein for a battery (112) from the at least one battery (112), the processor unit (140) obtains a battery state of the battery (112) in the battery energy station (100) at a detection time and determines whether the battery state of the battery (112) is in an activated state; when the battery (112) is in the activated state, the processor unit (140) shuts down the battery (112) through the battery management system (BMS), restarts the battery (112), and recharges the battery (112) through the energy module (120); the processor unit (140) further determines whether receiving an abnormality notification corresponding to the battery (112) from the battery management system (BMS); when receiving the abnormality notification corresponding to the battery (112) from the battery management system (BMS), the processor unit (140) identifies that the battery (112) is being abnormally charged.

7. The battery energy station (100) as claimed in claim 6, wherein the processor unit (140) further receives the detection time from a remote server (200) through a network (210).

8. The battery energy station (100) as claimed in claim 6, wherein the processor unit (140) further sends a notification to a remote server (200) through a network (210) for indicating the battery (112) is being abnormally charged.

9. The battery energy station (100) as claimed in claim 6, wherein the processor unit (140) further locks and excludes the battery (112) that is being abnormally charged away from being available for battery swapping.

10. The battery energy station (100) as claimed in claim 6, wherein the processor unit (140) further records a charging abnormality event information corresponding to the battery (112) being abnormally charged and determines whether a certain event occurred;
wherein when the certain event occurred, the processor unit (140) deletes the charging abnormality event information;
wherein the certain event comprises a determination that the battery (112) is being swapped as the battery (112) exits the battery storage system (110) by the processor unit (140) and/or a determination that the battery energy station (100) is being restarted by the processor unit (140).
